# EUROPEAN PATENT APPLICATION

(11) **EP 2 168 830 A2**
(43) Date of publication of application: **31.03.2010**
(21) Application number: 09168484.5
(22) Date of filing: 24.08.2009
(51) Int. Cl.: B60W 30/02, B60W 20/00, B60K 6/46, B60W 10/08

(54) **Motor control method for electric-powered vehicle and driving apparatus for electric-powered vehicle**

(30) Priority: 30.09.2008 JP 2008255328
(71) Applicant: Mazda Motor Corporation, Aki-gun, Hiroshima 730-8670 (JP)
(72) Inventor: Seo, Nobuhide, Hiroshima 730-8670 (JP); Yonemori, Kei, Hiroshima 730-8670 (JP); Amano, Ryuichiro, Hiroshima 730-8670 (JP); Ebisumoto, Hirofumi, Hiroshima 730-8670 (JP)
(74) Representative: Zinnecker, Armin

(57) **Abstract**

Disclosed is a motor control method for an electric-powered vehicle (1), which is designed to switch an output characteristic of an electric motor (5) for rotatably driving a driving wheel (16) of the vehicle (1), between a low-speed mode adaptable to a relatively low rotation speed operation region and a high-speed mode adaptable to a relatively high rotation speed operation region, on the basis of a given switching rotation speed (Nt) as a threshold. The motor control method comprises a vehicle-turning information acquisition step (S1, S2) of acquiring information about a turning movement of the vehicle (1), a vehicle-turning determination step (S5, S9, S14, S18) of determining whether the vehicle (1) is in a non-straight-ahead traveling state, based on the information acquired in the vchicle-turning information acquisition step, and a shift step (S6, S10, S15, S19) of, if the determination in the vehicle-turning determination step is made that the vehicle is in the non-straight-ahead traveling state, shifting the switching rotation speed (Nt) to a value different from that in a straight-ahead traveling state of the vehicle. The motor control method of the present invention can prevent a behavior of the vehicle (1) from becoming unstable when the output characteristic of the electric motor (5) for rotatably driving the driving wheel (16) is switched between the low-speed mode and the high-speed mode.

## Description

### BACKGROUND OF THE INVENTION

### 1. Field of the Invention

The present invention relates to a motor control method for an electric-powered vehicle, which is designed to switch an output characteristic of an electric motor for rotatably driving a driving wheel of the vehicle, between a low-speed mode adaptable to a relatively low rotation speed operation region and a high-speed mode adaptable to a relatively high rotation speed operation region, on the basis of a given switching rotation speed as a threshold.

### 2. Description of the Background Art

Heretofore, in the field of vehicles, as one way to further improve emission performance and fuel economy performance, a so-called electric vehicle using an electric motor as a power source, instead of an internal combustion engine, such as a gasoline engine or a diesel engine, and a so-called hybrid vehicle using an electric motor as a power source in combination with the internal combustion engine, have been developed, as is generally known.

In the above type of vehicle using an electric motor as at least a part of a power source (hereinafter referred to as "electric-powered vehicle"), there is a need for controlling the electric motor to cover a relatively wide rotation speed range so as to allow an output characteristic of the electric motor to meet various traveling conditions of the vehicle.

As one example of such control, it is contemplated to provide a plurality of series-connected windings in each phase of the electric motor, and to switch a current pathway in such a manner as to apply a current to all the windings in a first operation region where a rotation speed is equal to or less than a given value, and apply a current to only a part of the windings in a second operation region where the rotation speed is greater than the given value. In this manner, a current is applied to only a part of the windings in the second operation region, so that inductance components can be reduced to suppress an induction voltage. This makes it possible to drive the electric motor at a higher rotation speed.

As a technique of switching a current pathway for applying a current to windings to change an output characteristic in the above manner, there has been known an AC generator as disclosed, for example, in JP 06-292329A.

During an operation of switching a control mode of an electric motor having a plurality of windings in each phase thereof, from a mode where a current is applied to all the windings to control the electric motor to obtain an output characteristic adaptable to a relatively low rotation speed operation region (this mode will hereinafter be referred to as "low-speed mode"), to a mode where a current is applied to only a part of the windings to control the electric motor to obtain an output characteristic adaptable to a relatively high rotation speed operation region (this mode will hereinafter be referred to as "high-speed mode"), a torque to be transmitted to a driving wheel of a vehicle is likely to transiently fluctuate, due to intermittent fluctuations in an output of the electric motor, and others. In particular, such torque fluctuations arising during the switching from the low-speed mode to the high-speed mode occur when the vehicle is, for example, turning with a relatively large steering angle, a behavior of the vehicle is liable to become unstable.

### SUMMARY OF THE INVENTION

In view of the above circumstances, it is an object of the present invention to effectively prevent a behavior of a vehicle from becoming unstable during an operation of switching an output characteristic of an electric motor for rotatably driving a driving wheel of the vehicle, between a low-speed mode and a high-speed mode.

In order to achieve the above object, the present invention provides a motor control method for an electric-powered vehicle, which is designed to switch an output characteristic of an electric motor for rotatably driving a driving wheel of the vehicle, between a low-speed mode adaptable to a relatively low rotation speed operation region and a high-speed mode adaptable to a relatively high rotation speed operation region, on the basis of a given switching rotation speed as a threshold. The motor control method comprises a vehicle-turning information acquisition step of acquiring information about a turning movement of the vehicle, a vehicle-turning determination step of determining whether the vehicle is in a non-straight-ahead traveling state, based on the information acquired in the vehicle-turning information acquisition step, and a shift step of, if the determination in the vehicle-turning determination step is made that the vehicle is in the non-straight-ahead traveling state, shifting the switching rotation speed to a value different from that in a straight-ahead traveling state of the vehicle.

The present invention also provides a driving apparatus for an electric-powered vehicle, which comprises an electric motor adapted to rotatably drive a driving wheel of the vehicle, and a controller adapted to switch an output characteristic of the electric motor between a low-speed mode adaptable to a relatively low rotation speed operation region and a high-speed mode adaptable to a relatively high rotation speed operation region, on the basis of a given switching rotation speed as a threshold, wherein the controller is operable to acquire information about a turning movement of the vehicle, and, based on the acquired information, determine whether the vehicle is in a non-straight-ahead traveling state, and wherein, if the determination is made that the vehicle is in the non-straight-ahead traveling state, the controller is operable to shift the switching rotation speed to a value different from that in a straight-ahead traveling state of the vehicle.

### BRIEF DESCRIPTION OF THE DRAWINGS

FIG. 1 is a schematic top plan view showing a general configuration of a driving apparatus for an electric-powered vehicle, which employs a motor control method according to one embodiment of the present invention.
FIG. 2 is a block diagram showing a control system of the driving apparatus.
FIG. 3 is a circuit diagram showing electrical configurations of an electric motor, an inverter and others in the driving apparatus.
FIG. 4 is a graph for explaining an output characteristic of the electric motor.
FIG. 5 is a flowchart showing a content of a control operation to be performed during driving of the electric motor.
FIG. 6 is a graph for explaining an operation of shifting a switching rotation speed, which corresponds to FIG. 4.
FIG. 7 is a graph for explaining a relationship between a steering-angle increase rate and a shift amount of the switching rotation speed.
FIG. 8 is a graph for explaining a relationship between a steering angle of a steering wheel and the shift amount of the switching rotation speed.
FIG. 9 is a circuit diagram for explaining an example of modification of the driving apparatus.
FIG. 10 is a graph showing an electrical configuration of an electric motor in the modification.

### DESCRIPTION OF THE PREFERRED EMBODIMENTS

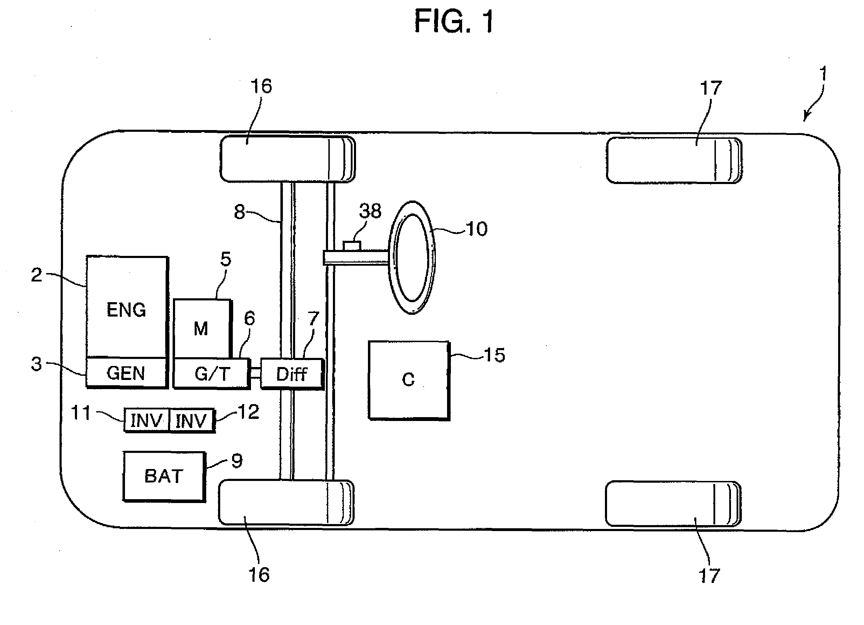

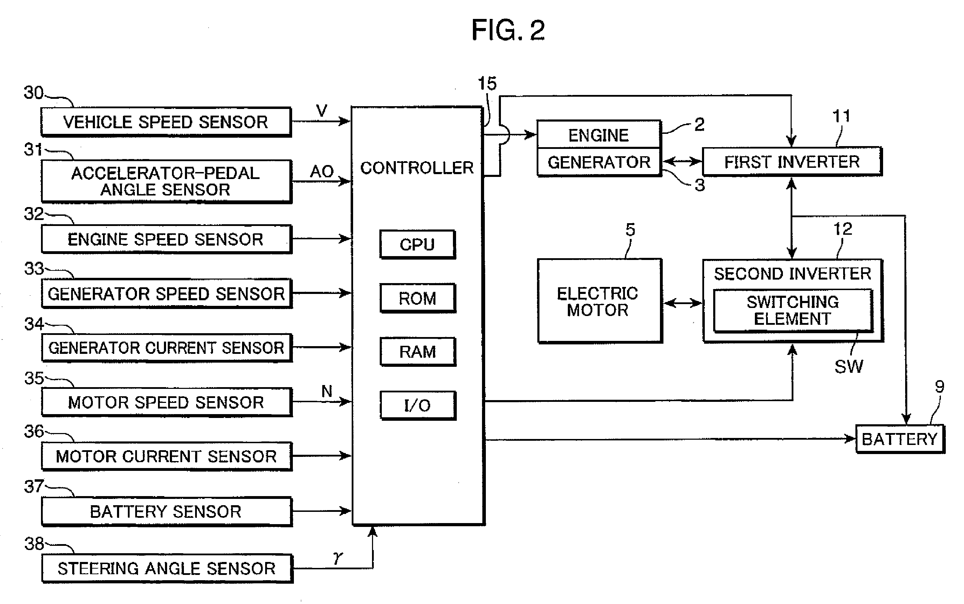

FIG. 1 is a schematic top plan view showing a general configuration of a driving apparatus for an electric-powered vehicle, which employs a motor control method according to one embodiment of the present invention, and FIG. 2 is a block diagram showing a control system of the driving apparatus. The driving apparatus illustrated in FIGS. 1 and 2 is configured as a driving apparatus for driving an electric-powdered vehicle 1 consisting of a hybrid vehicle (the electric-powered vehicle 1 will hereinafter be referred to simply as "vehicle 1"). Specifically, the driving apparatus comprises: an engine 2 composed of a gasoline engine, a diesel engine or the like; a generator 3 adapted to start the engine 2 according to need, and receive a driving force from the engine 2 to generate electric power; a battery 9 serving as an electric storage device for storing electric power generated by the generator 3; an electric motor 5 provided as a power source for traveling of the vehicle 1 and adapted to receive a supply of electric power from the battery 9 to drive an after-mentioned driving wheel 16; a first inverter 11 and a second inverter 12 adapted to convert DC power supplied from the battery 9 into AC power to drive respective ones of the generator 3 and the electric motor 5; and a controller 15 adapted to comprehensively control the above devices.

The electric motor 5 is interlockingly connected to a driveshaft 8 through a gear train 6 and a differential mechanism 7, so that a driving force of the electric motor 5 is transmitted to a pair of right and left driving wheels 16 coupled to the driveshaft 8 via a driving-force transmission path including the gear train 6, the differential mechanism 7 and the driveshaft 8. In this embodiment, among four road wheels provided on front and rear sides of the vehicle 1, each of two road wheel on the front side of the vehicle 1 (two front wheels) is a driving wheel 16, and each of two road wheel on the rear side of the vehicle 1 (two rear wheels) is a driven wheel 17.

For example, the electric motor 5 is comprised of a three-phase AC synchronous motor. The electric motor 5 is adapted to receive a supply of electric power from the battery 9 through the second inverter 12 according to need, to drive the driveshaft 8 and the driving wheels 16 through the gear train 6 and the differential mechanism 7. Further, the electric motor 5 is adapted, under specific traveling conditions of the vehicle 1, such as deceleration and downhill traveling, to receive a driving force from the driveshaft 8 to generate electric power, and stored the generated electric power in the battery 9.

The generator 3 has both a function of a starter adapted to forcibly rotate a crankshaft of the engine 2 to start the engine 2, and a function of an alternator adapted to receive a driving force from the crankshaft of the engine 2 to generate electric power.

Each of the driving wheels 16 consisting of front wheels is provided such that a direction thereof is changeable depending on a steering angle of a steering wheel 10, i.e., the driving wheel 16 is adapted to allow a steered angle thereof to be controlled according to a driver's operation of the steering wheel 10 so as to change a traveling direction of the vehicle 1 in a straight-ahead direction or any rightward/leftward direction.

As shown in FIG. 2, the controller 15 comprises a CPU, a ROM, a RAM and an I/O device (input-output interface) each of which is a conventional type, wherein various programs, such as control programs, is pre-stored in the ROM, and the RAM includes various work memories required for executing the control programs.

The controller 15 is electrically connected with a plurality of sensors installed in various sections of the vehicle 1. Specifically, the controller 15 is electrically connected with: a vehicle speed sensor 30 operable to detect a traveling speed (vehicle speed) V of the vehicle 1; an accelerator-pedal angle sensor 31 operable to detect an accelerator-pedal angle AO, i.e., an angle of an accelerator pedal (not shown) to be operated by a driver in such a manner as to be depressed with a foot of the driver; an engine speed sensor 32 operable to detect a rotation speed of the crankshaft of the engine 2; a generator speed sensor 33 operable to detect a rotation speed of a generator shaft of the generator 3; a generator current sensor 34 operable to detect an input current to be input from the battery 9 into the generator 3 or an output current to be generated by the generator 3 and output to the battery 9; a motor speed sensor 35 operable to detect a rotation speed N of a motor shaft of the electric motor 5; a motor current sensor 36 operable to detect an input/output current of the electric motor 5; a battery sensor 37 operable to detect a remaining capacity of the battery 9; and a steering angle sensor 38 operable to detect a steering angle γ of the steering wheel 10, so that control information detected by each of the above sensors 30 to 38 is input into the controller 15 in the form of an electric signal.

The controller 15 is adapted to perform various calculations based on input information from the sensors 30 to 38 and comprehensively control respective operations of the engine 2, the generator 3, the electric motor 5 and the first and second inverters 11, 12, based on results of the calculations. In this embodiment, the controller 15 controls each of the sections of the vehicle 1, for example, in such a manner that the electric motor 5 is controllably driven based on a driver's operation of the accelerator pedal to adjust the traveling speed of the vehicle 1, and, when the remaining capacity of the battery 9 becomes few, the engine 2 is stated to allow the generator 3 to generate electric power so as to replenish the generated electric power into the battery 9.

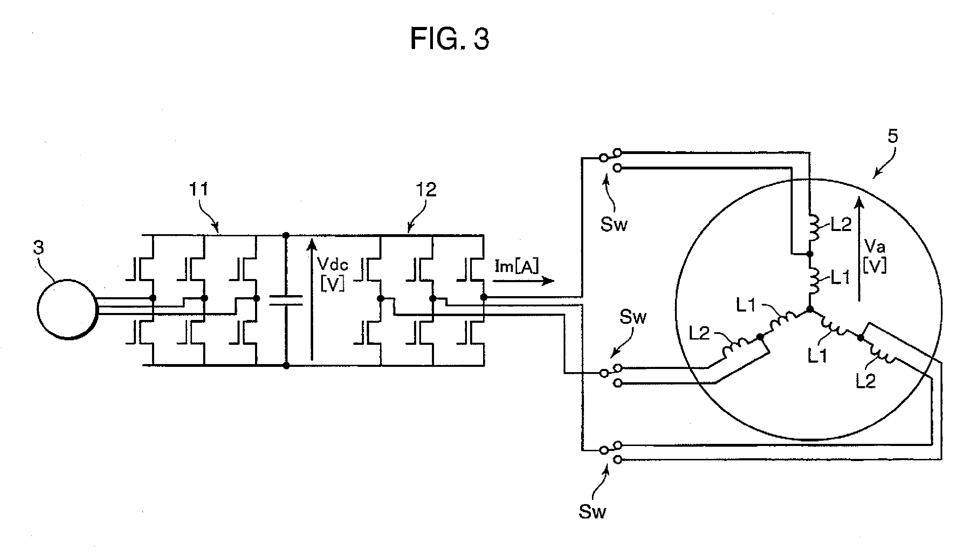

FIG. 3 is a circuit diagram showing the generator 3, the electric motor 5 and the first and second inverters 11, 12. As shown in FIG. 3, each of the three phases (U-phase, V-phase, W-phase) of the electric motor 5 is provided with two windings consisting of a first winding L1 and a second winding L2 connected in series to each other, and the second inverter 12 is provided with three switching elements SW each serving as a means to switch a current pathway for applying a current to the series-connected first and second windings L1, L2 in each of the phases. Specifically, according to a switching operation of each of the switching elements SW, the current pathway is switched between a first mode where a current Im from the second inverter 12 is applied to both the first and second windings L1, L2, and a second mode where the current Im is applied to only the first windings L1.

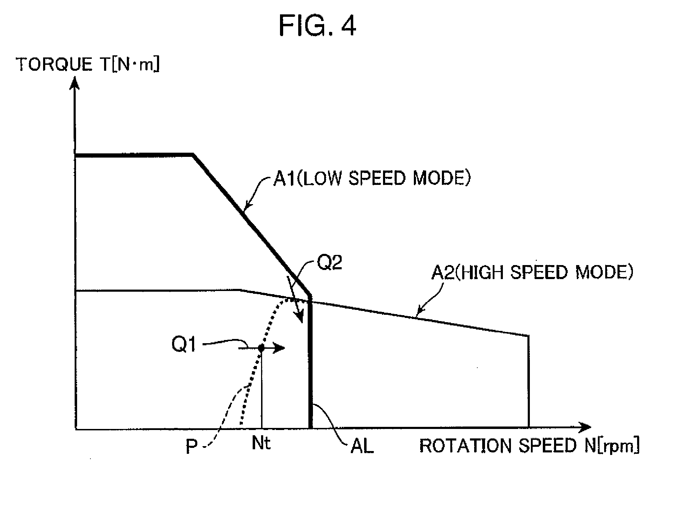

FIG. 4 is a graph showing an output characteristic of the above electric motor 5. In this graph, the thick line indicates a characteristic line A1 in the first mode where the current is applied to both the first and second windings L1, L2, and the thin line indicates a characteristic line A2 in the second mode where the current is applied to only the first winding L1. As shown in FIG. 4, in the second mode where the current is applied to only the first winding L1 (characteristic line A2), a shaft torque T of the electric motor 5 is lowered, whereas the electric motor 5 can be driven at a higher rotation speed, as compared with the first mode where the current is applied to both the first and second windings L1, L2 (characteristic line A1). The reason is as follows.

When the current is applied to the first and second windings L1, L2 of the electric motor 5, an induction voltage Va is generated in proportion to the rotation speed N of the electric motor 5, (motor rotation speed N) as shown in FIG. 3. As long as the induction voltage Va is smaller than a voltage Vdc in the second inverter 12, the current Im can flow from the second inverter 12 to the electric motor 5 according to the potential difference. However, when the motor speed N is increased from the above state, and the induction voltage Va becomes substantially equal to the voltage Vdc in the second inverter 12, the current Im stops flowing to the electric motor 5. Thus, as indicated by a limit line AL of the characteristic line A1 in FIG. 4, the torque T of the electric motor 5 is sharply lowered. Therefore, the current pathway is switched by the switching element SW before the current Im stops flowing, in such a manner as to apply the current Im to only the first winding L 1 while bypassing the second winding L2. In this case, the induction voltage Va of the electric motor 5 is reduced by a value corresponding to the second winding L2, so that a potential difference between the inverter 12 and the electric motor 5 can be ensured even in a region on a high rotation speed side relative to the limit line AL to allow the electric motor 5 to be driven at a higher rotation speed.

As above, in this embodiment, a plurality of series-connected windings L1, L2 are provided in each of the phases of the electric motor 5, and a current pathway is switched in such a manner as to apply a current to all or a part of the windings L1, L2 to appropriately switch an output characteristic of the electric motor 5 between a first characteristic (characteristic line A1 in FIG. 4) adaptable to a relatively low rotation speed operation region, and a second characteristic (characteristic line A2 in FIG. 4) adaptable to a relatively high rotation speed operation region. A mode where a current is applied to both the first and second windings L1, L2 to control the electric motor 5 to have a first output characteristic as shown in the characteristic line A1 will hereinafter be referred to as "low-speed mode", and a mode where a current is applied to only the first winding L1 to control the electric motor 5 to have a second output characteristic as shown in the characteristic line A2 will hereinafter be referred to as "high-speed mode".

A switching from the low-speed mode to the high-speed mode is performed at a timing when the rotation speed N of the electric motor 5 is increased to a region on a high rotation speed side relative to a switching line P illustrated in FIG. 4 (see, for example, an arrowed line Q1 in FIG. 4). More specifically, the switching line P is formed by setting a value of a switching rotation speed Nt serving as a threshold for use in switching from the low-speed mode to the high-speed mode, with respect to each torque value of the electric motor 5 in the form of a map, and continuously connecting the values of the switching rotation speed Nt.

In FIG. 4, the switching line P is set to extend upwardly while slightly inclining rightwardly. This setting is made in consideration of electrical efficiency. Further, an upper end of the switching line P is formed to extend along an upper limit line of the characteristic line A2 in the high-speed mode. The reason is that, when an operation region of the electric motor 5 is shifted from a region on a high torque side relative to the upper limit line to a region on a low torque/high rotation speed side relative to the upper limit line as indicated by an arrowed line Q2, the shift line cuts across the switching line P to allow the output characteristic of the electric motor 5 to be switched to the high-speed mode.

Further, when the rotation speed N of the electric motor 5 being driven in the high-speed mode is reduced to a region on a low rotation speed side relative to the switching line P in a direction opposite to one of the arrowed lines Q1, Q2, the output characteristic of the electric motor 5 is switched from the high-speed mode to the low-speed mode.

The switching line P as a borderline between the low-speed mode and the high-speed mode is variably set by the controller 15. Specifically, the controller 15 is operable to determine whether the vehicle 1 is in an initial state of turning, based on input information from the steering angle sensor 38, and variably set the switching line P in a given rotation speed range.

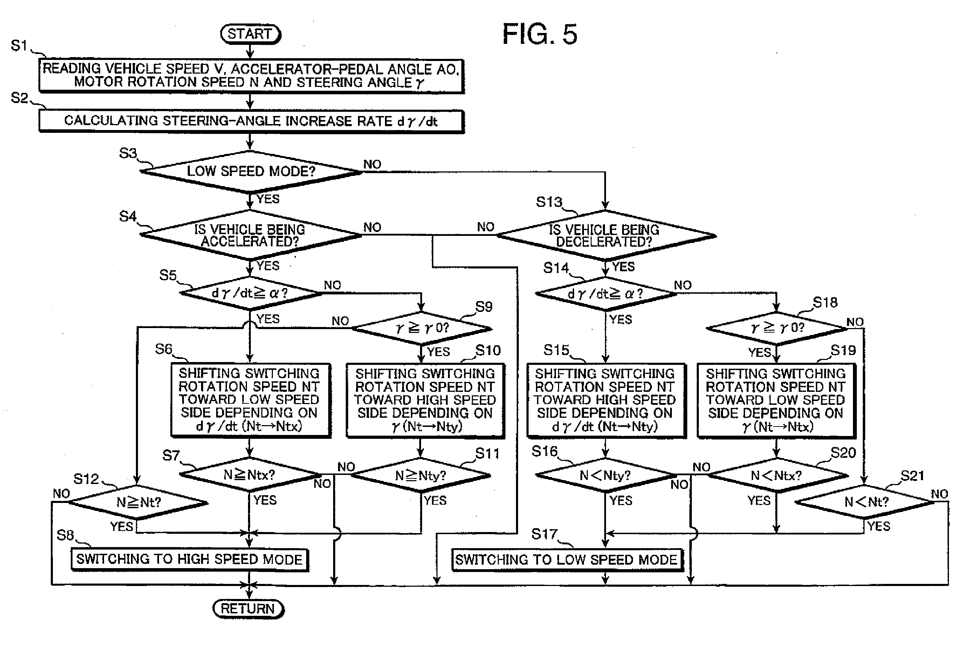

A control operation to be performed during driving of the electric motor 5 in the above electric-powered vehicle driving apparatus will be described based on the flowchart in FIG. 5. Upon start of the routine illustrated in the flowchart, the controller 15 performs a control operation of reading the vehicle speed V detected by the vehicle speed sensor 30, the accelerator-pedal angle AO detected by the accelerator-pedal angle sensor 31, the rotation speed N of the electric motor 5 detected by the motor speed sensor 35, and the steering angle γ of the steering wheel 10 detected by the steering angle sensor 38 (Step S1).

Then, the controller 15 performs a control operation of calculating a steering-angle increase rate dγ/dt indicative of a speed at which the steering angle γ increases, based on a difference between a current detection value and a previous detection value of the steering angle γ, etc. (Step S2).

Further, the controller 15 performs a control operation of determining whether the output characteristic of the electric motor 5 is set in the low-speed mode at this time, based on an operation state of the switching elements SW of the second inverter 12 (Step S3). Specifically, if each of the switching elements SW is operated to set the current pathway in such a manner as to apply a current to both the two windings L1, L2 of the electric motor 5, the first characteristic (characteristic line A1 in FIG. 4) adaptable to a relatively low rotation speed operation region is selected as the output characteristic of the electric motor 5, as previously mentioned. Thus, if the switching element SW is in the above operation state, it is determined that the electric motor 5 is being driven in the low-speed mode.

If the determination in Step S3 is made as YES, i.e., it is determined that the output characteristic of the electric motor 5 is set to the low-speed mode, the controller 15 performs a control operation of determining whether the vehicle 1 is being accelerated (Step S4). Specifically, based on the vehicle speed V, the accelerator-pedal angle AO and the motor rotation speed N which have been read in Step S1, it is determined whether each of the vehicle speed V and the motor rotation speed N is increased at a given rate or more according to depression of the accelerator pedal by a driver, so as to perform the determination on whether the vehicle 1 is being accelerated.

If the determination in Step S4 is made as YES, i.e., it is determined that the vehicle 1 is being accelerated, the controller 15 performs a control operation of determining whether the steering-angle increase rate dγ/dt of the steering wheel 10 obtained in Step S2 is equal to or greater than a given threshold value α (Step S5). The operation in Step S5 is performed to determine whether the vehicle 1 is in an initial state of turning (initial stage of a turning movement). Specifically, when a driver starts turning the steering wheel 10 during a straight-ahead traveling of the vehicle 1, or when a driver further turns the steering wheel 10 during turning of the vehicle 1 at a constant vehicle-turning radius, the steering angle γ is increased at a given rate or more, and correspondingly a turning movement of the vehicle 1 is initiated. Thus, an increase of the steering angle γ is detected based on a value of the steering-angle increase rate d γ/dt to determine that the vehicle 1 is in the initial state of turning. On the other hand, if the determination in Step S4 is made as NO, i.e., it is determined that the vehicle 1 is not being accelerated, the routine directly returns to Step S1 without making the determination on the steering-angle increase rate d γ/dt.

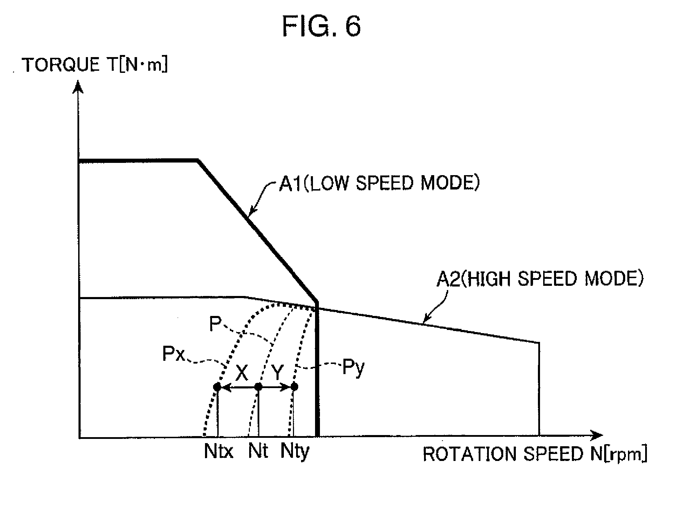

If the determination in Step S5 is made as YES, i.e., it is determined that the steering-angle increase rate d γ/dt is equal to or greater than the threshold value α (d γ/dt ≥ α), or the vehicle 1 is in the initial state of turning, the controller 15 performs a control operation of changing the switching rotation speed Nt serving as a threshold for use in switching the output characteristic of the electric motor 5 from the low-speed mode to the high-speed mode, to a new switching rotation speed Ntx shifted toward a low rotation speed side by a given amount, as indicated by an arrowed line X in FIG. 6 (Step S6). Thus, the switching line P corresponding to the switching rotation speed Nt is re-set to a new switching line Px shifted toward the low rotation speed side by the given amount.

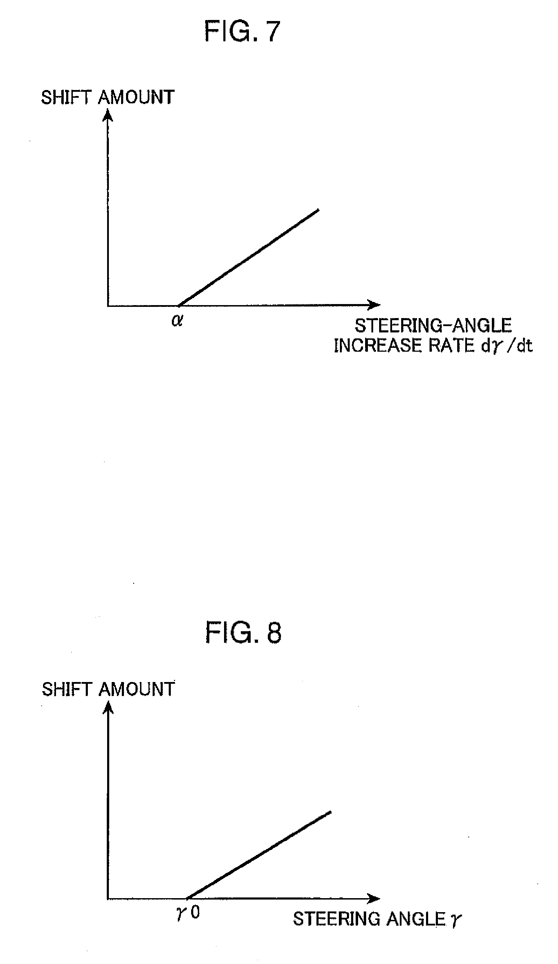

FIG. 7 is a graph for explaining a relationship between the steering-angle increase rate d γ/dt and a shift amount during an operation of shifting the switching rotation speed Nt (switching line P) toward a low rotation speed side, in Step S6. As shown in FIG. 7, a shift amount of the switching rotation speed Nt is set to a larger value as the steering-angle increase rate d γ/dt has a larger value. Specifically, the shift amount is variably set to a value proportional to a difference between the steering-angle increase rate d γ/dt obtained in Step S2, and the determination threshold α in Step S5, and the switching rotation speed Nt is shifted toward a low rotation speed side by the shift amount.

Subsequently, the controller 15 performs a control operation of determining whether the rotation speed N of the electric motor 5 read in Step S1 is equal to or greater than the new switching rotation speed Ntx shifted toward the low rotation speed side in Step S6 (Step S7). Specifically, a position of an actual driving state of the electric motor 5 on the characteristic diagram in FIG. 6 is identified based on the rotation speed N of the electric motor 5 and a currently required torque set by the accelerator-pedal angle AO, etc., and then it is determined whether the position is located on a high rotation speed side relative to the new switching line Px, so as to perform the determination on whether the motor rotation speed N is equal to or greater than the new switching rotation speed Ntx.

If the determination in Step S7 is made as YES, i.e., it is determined that the motor rotation speed N is equal to or greater than the new switching rotation speed Ntx (N ≥ Ntx), the controller 15 performs a control operation of activating each of the switching elements SW of the second inverter 12 to switch the current pathway in such a manner as to apply a current to only the first winding L1 in the first and second windings L1, L2 of the electric motor 5 to switch the output characteristic of the electric motor 5 to the high-speed mode providing a characteristic as indicated by the characteristic line A2 in FIG. 6 (Step S8).

The following description will be made about a control operation to be performed when the determination in Step S5 is made as NO, i.e., it is determined that the steering-angle increase rate d γ/dt is less than the threshold value α (d γ/dt < α) or the vehicle 1 is not in the initial state of turning. In this case, the controller 15 performs a control operation of determining whether the actual steering angle γ read in Step S1 is equal to or greater than a given threshold value γ0 (Step S9). The operation in the Step S9 is performed to determine whether the vehicle 1 is turning at a given vehicle-turning radius under a condition that a traveling direction of the vehicle 1 has already been changed to a certain extent. However, at this timing, the determination in the preceding Step S5 has been made as NO, i.e., it has been determined that the vehicle 1 is not in the initial state of turning. Thus, the determination of YES in Step S9 means that the vehicle-turning movement has already progressed partway, such as a situation where a turning direction of the vehicle 1 is coming closer to a direction intended by a driver, or a situation where the vehicle 1 is to be returned from a turning state to a straight-ahead traveling state.

If the determination in Step S9 is made as YES, i.e., it is determined that the vehicle 1 is turning (i.e., in a course of turning) with a given steering angle (γ0) or more, the controller 15 performs a control operation of changing the switching rotation speed Nt serving as a threshold for use in switching the output characteristic of the electric motor 5 from the low-speed mode to the high-speed mode, to a new switching rotation speed Nty shifted toward a high rotation speed side by a given amount, as indicated by an arrowed line Y in FIG. 6 (Step S10). Thus, the switching line P corresponding to the switching rotation speed Nt is re-set to a new switching line Py shifted toward the high rotation speed side by the given amount.

FIG. 8 is a graph for explaining a relationship between the steering angle γ and a shift amount during an operation of shifting the switching rotation speed Nt (switching line P) toward a high rotation speed side, in Step S10. As shown in FIG. 8, a shift amount of the switching rotation speed Nt is set to a larger value as the steering angle γ has a larger value. Specifically, the shift amount is variably set to a value proportional to a difference between the steering angle γ read in Step S1, and the determination threshold γ0 in Step S9, and the switching rotation speed Nt is shifted toward a high rotation speed side by the shift amount.

Subsequently, the controller 15 performs a control operation of determining whether the rotation speed N of the electric motor 5 read in Step S1 is equal to or greater than the new switching rotation speed Nty shifted toward the high rotation speed side in Step S10 (Step S11). Specifically, a position of an actual driving state of the electric motor 5 on the characteristic diagram in FIG. 6 is identified based on the rotation speed N of the electric motor 5 and a currently required torque set by the accelerator-pedal angle AO, etc., and then it is determined whether the position is located on a high rotation speed side relative to the new switching line Py, so as to perform the determination on whether the motor rotation speed N is equal to or greater than the new switching rotation speed Nty.

If the determination in Step S11 is made as YES, i.e., it is determined that the motor rotation speed N is equal to or greater than the new switching rotation speed Nty (N ≥ Nty), the controller 15 performs a control operation of activating each of the switching elements SW to switch the output characteristic of the electric motor 5 from the low-speed mode to the high-speed mode (Step S8).

The following description will be made about a control operation to be performed when the determination in Step S9 is made as NO, i.e., it is determined that the vehicle 1 is not in the course of turning. In this case, the controller 15 performs a control operation of determining whether the rotation speed N of the electric motor 5 is equal to or greater than the normal switching rotation speed Nt illustrated in FIG. 4 (Step S12). If the determination in Step S12 is made as YES, i.e., it is determined that the motor rotation speed N is equal to or greater than the switching rotation speed Nt (N ≥ Nt), the controller 15 performs a control operation of activating each of the switching elements SW to switch the output characteristic of the electric motor 5 from the low-speed mode to the high-speed mode (Step S8).

On the other hand, if the determination in any one of Steps S12, S11 and S7, i.e., it is determined that the motor rotation speed N is less than the switching rotation speed Nt (or Ntx or Nty), the routine returns to Step S1 without performing the switching of the output characteristic as in Step S8, and the output characteristic of the electric motor 5 is maintained in the low-speed mode.

The following description will be made about a control operation to be performed when the determination in Step S3 is made as NO, i.e., it is determined that the output characteristic of the electric motor 5 is set to the high-speed mode. In this case, based on the vehicle speed V, the accelerator-pedal angle AO and the motor rotation speed N which have been read in Step S1, the controller 15 performs a control operation of determining whether the vehicle 1 is being decelerated (Step S13).

If the determination in Step S13 is made as YES, i.e., it is determined that the vehicle 1 is being decelerated, the controller 15 performs a control operation of determining whether the vehicle 1 is in the initial state of turning, based on a determination on whether the steering-angle increase rate d γ/dt of the steering wheel 10 obtained in Step S2 is equal to or greater than the given threshold value α (Step S14). On the other hand, if the determination in Step S13 is made as NO, i.e., it is determined that the vehicle 1 is not being decelerated or the vehicle 1 is being accelerated or traveling at a constant speed, the routine directly returns to Step S1 without making the determination on the steering-angle increase rate d γ/dt.

If the determination in Step S14 is made as YES, i.e., it is determined that the vehicle 1 is in the initial state of turning, the controller 15 performs a control operation of changing the switching rotation speed Nt serving as a threshold for use in switching the output characteristic of the electric motor 5 from the high-speed mode to the low-speed mode, to a new switching rotation speed Nty shifted toward a high rotation speed side by a given amount, as indicated by an arrowed line Y in FIG. 6 (Step S15). Thus, the switching line P corresponding to the switching rotation speed Nt is re-set to a new switching line Py shifted toward the high rotation speed side by the given amount. This shift amount is set to a value proportional to the steering-angle increase rate d γ/dt of the steering wheel 10, in the same manner as that in Step S6.

Subsequently, the controller 15 performs a control operation of determining whether the rotation speed N of the electric motor 5 read in Step S1 is less than the new switching rotation speed Nty shifted toward the high rotation speed side in Step S15 (Step S16). Specifically, a position of an actual driving state of the electric motor 5 on the characteristic diagram in FIG. 6 is identified based on the rotation speed N of the electric motor 5 and a currently required torque set by the accelerator-pedal angle AO, etc., and then it is determined whether the position is located on a low rotation speed side relative to the new switching line Py, so as to perform the determination on whether the motor rotation speed N is less than the new switching rotation speed Nty.

If the determination in Step S16 is made as YES, i.e., it is determined that the motor rotation speed N is less than the new switching rotation speed Nty (N < Nty), the controller 15 performs a control operation of activating each of the switching elements SW to switch the current pathway for the electric motor 5 in such a manner as to switch the output characteristic of the electric motor 5 from the high-speed mode to the low-speed mode (Step S17).

The following description will be made about a control operation to be performed when the determination in Step S14 is made as NO, i.e., it is determined that the steering-angle increase rate d γ/dt is less than the threshold value α (d γ/dt < α) or the vehicle 1 is not in the initial state of turning. In this case, the controller 15 performs a control operation of determining whether the vehicle 1 is in the course of turning, based on a determination on whether the actual steering angle γ read in Step S1 is equal to or greater than the given threshold value γ0 (Step S18).

If the determination in Step S18 is made as YES, i.e., it is determined that the vehicle 1 is in the course of turning with a given steering angle (γ0) or more, the controller 15 performs a control operation of changing the switching rotation speed Nt serving as a threshold for use in switching the output characteristic of the electric motor 5 from the high-speed mode to the low-speed mode, to a new switching rotation speed Ntx shifted toward a low rotation speed side by a given amount, as indicated by the arrowed line X in FIG. 6 (Step S19). Thus, the switching line P corresponding to the switching rotation speed Nt is re-set to a new switching line Px shifted toward the low rotation speed side by the given amount. This shift amount is set to a value proportional to the steering angle γ of the steering wheel 10, in the same manner as that in Step S10.

Subsequently, the controller 15 performs a control operation of determining whether the rotation speed N of the electric motor 5 read in Step S1 is less than the new switching rotation speed Ntx shifted toward the low rotation speed side in Step S19 (Step S20). Specifically, a position of an actual driving state of the electric motor 5 on the characteristic diagram in FIG. 6 is identified based on the rotation speed N of the electric motor 5 and a currently required torque set by the accelerator-pedal angle AO, etc., and then it is determined whether the position is located on a low rotation speed side relative to the new switching line Px, so as to perform the determination on whether the motor rotation speed N is less than the new switching rotation speed Ntx.

If the determination in Step S20 is made as YES, i.e., it is determined that the motor rotation speed N is less than the new switching rotation speed Ntx (N < Ntx), the controller 15 performs a control operation of activating each of the switching elements SW to switch the output characteristic of the electric motor 5 from the high-speed mode to the low-speed mode (Step S17).

The following description will be made about a control operation to be performed when the determination in Step S18 is made as NO, i.e., it is determined that the vehicle is not in the course of turning. In this case, the controller 15 performs a control operation of determining whether the rotation speed N of the electric motor 5 is less than the normal switching rotation speed Nt illustrated in FIG. 4 (Step S21). If the determination in Step S21 is made as YES, i.e., it is determined that the motor rotation speed N is less than the switching rotation speed Nt (N < Nt), the controller 15 performs a control operation of activating each of the switching elements SW to switch the output characteristic of the electric motor 5 from the high-speed mode to the low-speed mode (Step S17).

On the other hand, if the determination in any one of Steps S21, S20 and S16, i.e., it is determined that the motor rotation speed N is equal to or greater than the switching rotation speed Nt (or Ntx or Nty), the routine returns to Step S1 without performing the switching of the output characteristic as in Step S17, and the output characteristic of the electric motor 5 is maintained in the high-speed mode.

In the above control operation according to the flowchart in FIG. 5, Steps S1 and S2 are equivalent to a vehicle-turning information acquisition step set forth in the appended claims. Further, Steps S5, S9, S14 and S18 are equivalent to a vehicle-turning determination step set forth in the appended claims, and Steps S6, S10, S15 and S19 are equivalent to a shift step set forth in the appended claims. Step S4 is equivalent to a vehicle-acceleration determination step set forth in the appended claims, and Step S13 is equivalent to a vehicle-deceleration determination step set forth in the appended claims.

As mentioned above, the driving apparatus for the electric-powered vehicle 1 in the above embodiment comprises the electric motor 5 adapted to rotatably drive the driving wheel 16 of the vehicle 1, and the controller 15 adapted to switch the output characteristic of the electric motor 5 between the low-speed mode adaptable to a relatively low rotation speed operation region and the high-speed mode adaptable to a relatively high rotation speed operation region, on the basis of a given switching rotation speed Nt as a threshold. In the above embodiment, the control operation for the electric motor 5 is performed under control of the controller 15 as follows. When the electric motor 5 is driven in the low-speed mode, it is determined whether the vehicle 1 is being accelerated (Step S4). If the determination is made that the vehicle 1 is being accelerated, it is further determined whether the vehicle 1 is in an initial state of turning (initial stage of a turning movement), based on a steering-angle increase rate d γ/dt of the steering wheel 10 (Step S5). If the determination is made that the vehicle 1 is in the initial state of turning, the switching rotation speed Nt is shifted toward a low rotation speed side (Step S6). This control method has an advantage of being able to effectively prevent a behavior of the vehicle 1 from becoming unstable when the output characteristic of the electric motor 5 is switched between the low-speed mode and the high-speed mode.

More specifically, in the above embodiment, if it is determined that the vehicle 1 being driven in the low-speed mode is being accelerated and in the initial state of turning, the switching rotation speed Nt is shifted toward a low rotation speed side (i.e., changed from Nt to Ntx), and the output characteristic of the electric motor 5 is switched from the low-speed mode to the high-speed mode on the basis of the shifted switching rotation speed Ntx. Thus, when the vehicle 1 is in the initial state of turning, a timing of switching from the low-speed mode to the high-speed mode becomes earlier than that in a straight-ahead traveling state of the vehicle 1 (i.e., the steering angle γ ≈ 0, and steering-angle increase rate d γ/dt ≈ 0), so that the switching of the output characteristic is completed at the earliest possible timing in the vehicle-turning movement. This makes it possible to effectively prevent the occurrence of torque fluctuations due to switching of the output characteristic performed at a timing when a vehicle-turning movement has progressed to a large extent, to adequately ensure stability of the behavior of the vehicle 1.

In the above embodiment, when the electric motor is driven in the high-speed mode (if the determination in Step S3 is made as NO), it is determined whether the vehicle 1 is being decelerated (Step S13). If the determination is made that the vehicle 1 is being decelerated, it is further determined whether the vehicle 1 is in the initial state of turning, based on the steering-angle increase rate d γ/dt of the steering wheel 10 (Step S14). If the determination is made that the vehicle 1 is in the initial state of turning, the switching rotation speed Nt is shifted toward a high rotation speed side (i.e., changed from Nt to Nty), and the output characteristic of the electric motor 5 is switched from the high-speed mode to the low-speed mode on the basis of the shifted switching rotation speed Nty (Step S15). Thus, when the vehicle 1 is in the initial state of turning, switching from the high-speed mode to the low-speed mode can be performed at the earliest possible timing. This provides an advantage of being able to effectively prevent the behavior of the vehicle 1 from becoming unstable due to the occurrence of torque fluctuations due to switching of the output characteristic performed at a timing when a vehicle-turning movement has progressed.

As above, in the above embodiment, if it is determined that the vehicle 1 is in the initial state of turning, the switching rotation speed Nt is shifted toward a low rotation speed side or a high rotation speed side depending on whether the vehicle 1 is being accelerated or decelerated, to switch the output characteristic of the electric motor 5 at a relatively early timing. This control operation has an advantage of being able to switch the output characteristic of the electric motor 5 at the earliest possible timing in the vehicle-turning movement, to effectively prevent a behavior of the vehicle 1 during turning from becoming unstable due to torque fluctuations during the switching.

Particularly, in the above embodiment, it is determined whether the vehicle 1 is in the initial state of turning, based on the steering-angle increase rate d γ/dt of the steering wheel 10, and, if the determination is made that the vehicle 1 is in the initial state of turning, a shift amount for shifting the switching rotation speed Nt is set to become larger in proportion to a value of the steering-angle increase rate d γ/dt. This provides an advantage of being able to switch the output characteristic of the electric motor 5 at an earlier timing as the vehicle-turning movement is performed more quickly, to more effectively prevent the occurrence of torque fluctuations due to switching of the output characteristic performed at a timing when the vehicle-turning movement has progressed.

In the above embodiment, when the electric motor 5 is driven in the low-speed mode, and the vehicle 1 being accelerated is not in the initial state of turning (if the determination in Step S5 is made as NO), it is determined whether the vehicle 1 is in a course of turning with a given steering angle (γ0) or more (Step S9). If the determination is made that the vehicle 1 is in the course of turning, the switching rotation speed Nt is shifted toward a high rotation speed side (i.e., changed from Nt to Nty), and the output characteristic of the electric motor 5 is switched from the low-speed mode to the high-speed mode on the basis of the shifted switching rotation speed Nty (Step S10). Thus, under a condition that a vehicle-turning movement has progressed, a timing of switching from the low-speed mode to the high-speed mode becomes later than that in the straight-ahead traveling state of the vehicle 1, to prohibit the output characteristic of the electric motor 5 from being immoderately switched during turning of the vehicle 1. In this manner, when the vehicle 1 is in the course of turning, the output characteristic of the electric motor 5 is switched at the latest possible timing. This provides an advantage of being able to effectively prevent an undesirable situation where the turning movement of the vehicle 1 is disturbed by torque fluctuations occurring during the switching, to adequately ensure stability of the behavior of the vehicle 1 during turning.

In the above embodiment, when the electric motor 5 is driven in the high-speed mode, and the vehicle 1 being decelerated is not in the initial state of turning (if the determination in Step S14 is made as NO), it is determined whether the vehicle 1 is in a course of turning with the given steering angle (γ0) or more (Step S18). If the determination is made that the vehicle 1 is in the course of turning, the switching rotation speed Nt is shifted toward a low rotation speed side (i.e., changed from Nt to Ntx), and the output characteristic of the electric motor 5 is switched from the high-speed mode to the low-speed mode on the basis of the shifted switching rotation speed Ntx (Step S19). Thus, under a condition that a vehicle-turning movement has progressed, a timing of switching from the high-speed mode to the low-speed mode becomes later than that in the straight-ahead traveling state of the vehicle 1. This provides an advantage of being able to effectively prevent the behavior of the vehicle 1 during turning from becoming unstable due to torque fluctuations caused by the switching of the output characteristic of the electric motor 5.

As above, in the above embodiment, if it is determined that the turning movement of the vehicle 1 has progressed partway, the switching rotation speed Nt is shifted toward a high rotation speed side or a low rotation speed side depending on whether the vehicle 1 is being accelerated or decelerated, to switch the output characteristic of the electric motor 5 at a relatively late timing. This control operation has an advantage of being able to effectively avoid an undesirable situation where the output characteristic of the electric motor 5 is immoderately switched during turning of the vehicle 1, and the turning movement of the vehicle 1 is disturbed by torque fluctuations occurring during the switching, to adequately ensure stability of the behavior of the vehicle 1 during turning.

Particularly, in the above embodiment, it is determined whether the vehicle 1 is in the course of turning, based on the steering angle γ of the steering wheel 10, and, if the determination is made that the vehicle 1 is in the course of turning, the shift amount for shifting the switching rotation speed Nt is set to become larger in proportion to a value of the steering angle γ. This provides an advantage of being able to switch the output characteristic of the electric motor 5 at a later timing as a turning radius of the vehicle 1 has a smaller value and thereby the behavior of the vehicle 1 is more likely to become unstable, to more effectively prevent torque fluctuations due to switching of the output characteristic from disturbing the behavior of the vehicle 1 during turning.

In the above embodiment, when the rotation speed of the electric motor 5 is increased or reduced to the given switching rotation speed Nt, the switching elements SW are operated activated to switch the current pathway in such a manner as to apply a current to all or a part of the plurality of windings L1, L2 provided in each of the phases of the electric motor 5 to switch the output characteristic of the electric motor 5 between the low-speed mode and the high-speed mode in response to the switching of the current pathway. This provides an advantage of being able to freely change the output characteristic of the electric motor 5 to easily achieve performance of the electric motor 5 adaptable to wider traveling conditions of the vehicle 1, with a relatively simple configuration configured to simply activating the switching elements SW to switch the current pathway.

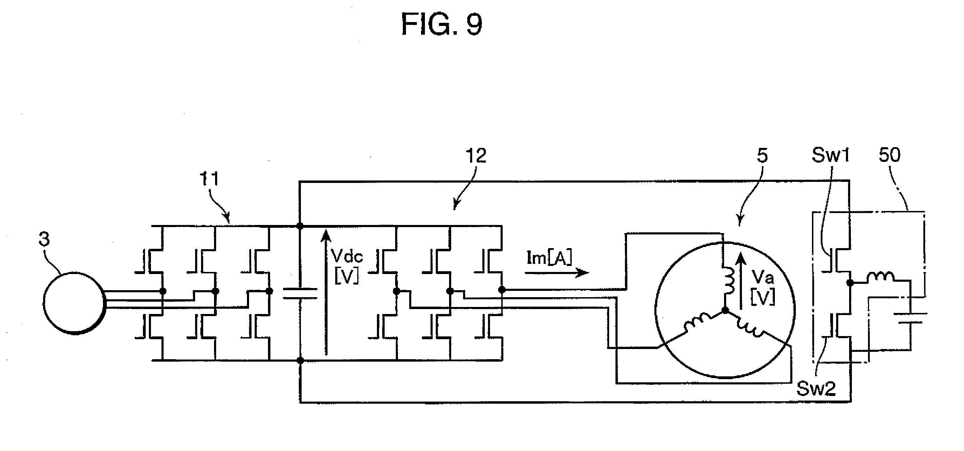

Instead of the above configuration, as shown in FIG. 9, the voltage Vdc in the second inverter 12 may be changed according to an operation of a step-up converter 50, to switch the output characteristic of the electric motor 5 between the low-speed mode and the high-speed mode.

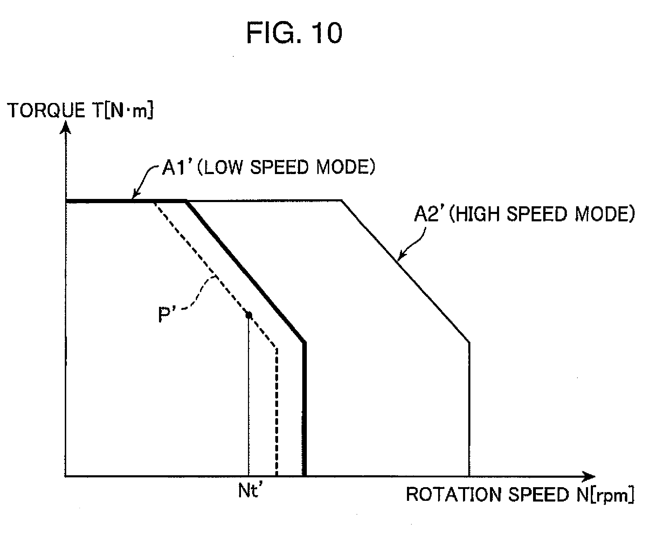

Specifically, the step-up converter 50 illustrated in FIG. 9 includes first and second switches SW1, SW2. When the output characteristic of the motor 5 is in the low-speed mode, each of the first and second switches SW1, SW2 is set in an OFF state, so that the output characteristic of the electric motor 5 is set to a relatively low rotation speed region, as indicated by a characteristic line A1' in FIG. 10. In an operation of switching the output characteristic of the electric motor 5 from the low-speed mode to the high-speed mode, the first switch SW1 is maintained in the OFF state, and the second switch SW2 is switching-controlled (repeatedly turned on/off), so that the voltage Vdc in the second inverter 12 is increased (stepped up), and correspondingly the output characteristic of the electric motor 5 is changed to a relatively high rotation speed region, as indicated by a characteristic line A2' in FIG. 10. During the step-up operation, the voltage Vdc can be controlled in a multi-stage manner according to the switching control of the second switch SW2 to allow an output of the electric motor 5 to be freely increased in an appropriate width depending on a traveling condition of the vehicle 1 or the like. Under a condition that the output characteristic of the electric motor 5 is in the high-speed mode, for example, when the vehicle 1 is placed in a deceleration state, and the electric motor 5 generates electric power while receiving a driving force from the driveshaft 8 (i.e., regenerative braking is performed), the first switch SW1 is switching-controlled, and the second switch SW2 is maintained in the OFF state, in a reverse manner to the above operation.

A line P' in FIG. 10 corresponds to a switching rotation speed Nt' serving as a threshold for use in switching the output characteristic of the electric motor 5 between the low-speed mode and the high-speed mode. When the rotation speed N of the electric motor 5 is increased or reduced to any value of the switching rotation speed Nt' on the line P', the second switch SW2 of the step-up converter 50 is switching-controlled or set to the OFF state to switch the output characteristic of the electric motor 5 between the low-speed mode and the high-speed mode. In this configuration, when a given condition, for example, a condition that the vehicle 1 is in the initial state of turning, is satisfied, the switching rotation speed Nt' may be shifted toward a low rotation speed side or a high rotation speed side, so as to prevent the occurrence of torque fluctuations of the electric motor 5 at a timing when a vehicle-turning movement has progressed, to stabilize a behavior of the vehicle 1 during turning, in the same manner as that in the above embodiment.

As is obvious from a comparison between the characteristic line A1' corresponding to the low-speed mode and the characteristic line A2' corresponding to the high-speed mode, differently from the above embodiment (FIG. 4), in the above configuration using the step-up converter 50, there is not a difference between respective maximum torques in the low-speed mode and the high-speed mode. Thus, even if the electric motor 5 is constantly driven in the high-speed mode by maintaining the step-up converter 50 in a step-up state (in a state when the second switch SW2 is switching-controlled), there is no problem in terms of traveling of the vehicle 1. However, when the step-up converter 50 is in the step-up state, a certain level of switching loss inevitably occurs due to a switching action (repetitive on/off action) of the second switch SW2. Thus, if the motor 5 is constantly driven in the high-speed mode, energy loss due to the switching loss is excessively increased to cause deterioration in energy efficiency. Therefore, in order prevent such deterioration in energy efficiency, it is necessary to employ the control operation of driving the electric motor 5 in the low-speed mode and switching the output characteristic of the electric motor 5 to the high-speed mode only when needed.

In addition to the modification illustrated in FIGS. 9 and 10, the following modifications are also included in the scope of the present invention.

For example, in the above embodiment, it is determined whether the vehicle 1 is in the initial state of turning, based on the steering-angle increase rate d γ/dt (Step S5, Step S14). If the determination is made as NO, i.e., it is determined that the vehicle 1 is not in the initial state of turning, it is further determined whether the vehicle 1 is in the course of turning with the given steering angle (γ0) or more (Step S9, Step S18). If the determination is made as YES, i.e., it is determined that the vehicle 1 is in the course of turning, the switching rotation speed Nt is shifted to allow the switching between the low-speed mode and the high-speed mode to be performed at a relatively late timing (Step S10, Step S19). Alternatively, the above process may be modified such that the Step S5 (Step S14) for determining whether the vehicle 1 is in the initial state of turning is omitted, and Step 9 (Step 18) is set immediately after Step S4 (Step S13) (for determining whether the vehicle 1 is being accelerated (decelerated)), to perform the determination on whether the vehicle 1 is in the course of turning with the given steering angle (γ0) or more. In this case, irrespective of whether the vehicle 1 is in the initial state of turning, it is determined whether the vehicle 1 is in the course of turning with the given steering angle (γ0) or more, based on the steering angle γ. Thus, as long as the vehicle 1 is in the course of turning, the switching between the low-speed mode and the high-speed mode is performed at a timing later than that in a straight-ahead traveling state of the vehicle 1, regardless of a rate of progression of the turning. This control method also makes it possible to prevent the output characteristic of the electric motor 5 from being immoderately switched during turning of the vehicle 1, to stabilize a behavior of the vehicle 1.

In either case, a key feature of the present invention is to determine whether the vehicle 1 is in a non-straight-ahead traveling state (e.g., a state when the vehicle 1 is turning with a given steering angle or more, or the steering wheel 10 is further turned at a given steering-angle increase rate or more), based on values of the steering angle γ and the steering-angle increase rate d γ/dt, and, if the determination is made that the vehicle 1 is in the non-straight-ahead traveling state, shift the switching rotation speed Nt of the electric motor 5 to a value different from that in a straight-ahead traveling state of the vehicle 1. This control operation makes it possible to effectively improve stability of a behavior of the vehicle 1 in the non-straight-ahead traveling state.

Further, in the above embodiment, the steering angle γ or the steering-angle increase rate d γ/dt is acquired as information about a turning movement of the vehicle 1, and it is determined whether the vehicle 1 is in the non-straight-ahead traveling state, based on the acquired values. Alternatively, a road-wheel speed sensor may be installed in each of right and left road wheels to determine whether the vehicle 1 is in the non-straight-ahead traveling state, based on a difference between respective rotation speeds of the right and left road wheels, which is obtained by detection values of the road-wheel speed sensors.

Furthermore, although the above embodiment has been described based on one example where the control method of the present invention is applied to a hybrid vehicle using a combination of the engine 2 and the electric motor 5 as a power source, the control method of the present invention may be applied to any type of electric-powered vehicle using the electric motor 5 as an at least part of a power source.

In the last place, features and advantages of the present invention disclosed based on the above embodiment will be summarized as follows.

The present invention provides a motor control method for an electric-powered vehicle, which is designed to switch an output characteristic of an electric motor for rotatably driving a driving wheel of the vehicle, between a low-speed mode adaptable to a relatively low rotation speed operation region and a high-speed mode adaptable to a relatively high rotation speed operation region, on the basis of a given switching rotation speed as a threshold. The motor control method comprises a vehicle-turning information acquisition step of acquiring information about a turning movement of the vehicle, a vehicle-turning determination step of determining whether the vehicle is in a non-straight-ahead traveling state, based on the information acquired in the vehicle-turning information acquisition step, and a shift step of, if the determination in the vehicle-turning determination step is made that the vehicle is in the non-straight-ahead traveling state, shifting the switching rotation speed to a value different from that in a straight-ahead traveling state of the vehicle.

The present invention further provides a driving apparatus for an electric-powered vehicle, which comprises an electric motor adapted to rotatably drive a driving wheel of the vehicle, and a controller adapted to switch an output characteristic of the electric motor between a low-speed mode adaptable to a relatively low rotation speed operation region and a high-speed mode adaptable to a relatively high rotation speed operation region, on the basis of a given switching rotation speed as a threshold, wherein the controller is operable to acquire information about a turning movement of the vehicle, and, based on the acquired information, determine whether the vehicle is in a non-straight-ahead traveling state, and wherein, if the determination is made that the vehicle is in the non-straight-ahead traveling state, the controller is operable to shift the switching rotation speed to a value different from that in a straight-ahead traveling state of the vehicle.

In the motor control method and the driving apparatus of the present invention, the timing of switching the output characteristic of the electric motor for driving the vehicle is changed between when the vehicle is in the straight-ahead traveling state and when the vehicle is in the non-straight-ahead traveling state. This makes it possible to effectively improve stability of a behavior of the vehicle.

Preferably, in the motor control method of the present invention, the vehicle-turning determination step includes determining whether the vehicle is in an initial state of turning, and the shift step includes, if the determination in the vehicle-turning determination step is made that the vehicle is in the initial state of turning, shifting the switching rotation speed to allow the switching between the low-speed mode and the high-speed mode to be performed at a relatively early timing.

Preferably, in the driving apparatus of the present invention, the controller is operable, based on the acquired information, to determine whether the vehicle is in an initial state of turning, and wherein, if the determination is made that the vehicle is in the initial state of turning, the controller is operable to shift the switching rotation speed to allow the switching between the low-speed mode and the high-speed mode to be performed at a relatively early timing.

According to the above features, when the vehicle is in the initial state of turning, a timing of switching the output characteristic of the electric motor between the low-speed mode and the high-speed mode becomes earlier. This makes it possible effectively prevent the occurrence of torque fluctuations due to the switching of the output characteristic performed at a timing when a vehicle-turning movement has progressed, to adequately ensure the stability of the behavior of the vehicle during turning.

Preferably, the above motor control method further comprises a vehicle-acceleration determination step of, when the electric motor is driven in the low-speed mode, determining whether the vehicle is being accelerated, and wherein the vehicle-turning determination step includes, if the determination in the vehicle-acceleration determination step is made that the vehicle is being accelerated, determining whether the vehicle is in the initial state of turning, and the shift step includes, if the determination in the vehicle-turning determination step is made that the vehicle is in the initial state of turning, shifting the switching rotation speed toward a low rotation speed side.

Preferably, in the above driving apparatus, the controller is operable, when the electric motor is driven in the low-speed mode, to determine whether the vehicle is being accelerated, and wherein, if the determination is made that the vehicle is being accelerated, the controller is operable to determine whether the vehicle is in the initial state of turning, and wherein, if the determination is made that the vehicle is in the initial state of turning, the controller is operable to shift the switching rotation speed toward a low rotation speed side.

According to the above features, when the vehicle being accelerated is in the initial state of turning, the switching rotation speed is shifted toward a low rotation speed side. Thus, a timing of switching the output characteristic of the electric motor from the low-speed mode to the high-speed mode becomes earlier, and the switching to the high-speed mode is completed at the earliest possible timing in the vehicle-turning movement. This provides an advantage of being able to effectively prevent torque fluctuations due to switching of the output characteristic from disturbing a turning movement of the vehicle and destabilizing the behavior of the vehicle.

Preferably, the above motor control method further comprises a vehicle-deceleration determination step of, when the electric motor is driven in the high-speed mode, determining whether the vehicle is being decelerated, and wherein the vehicle-turning determination step includes, if the determination in the vehicle-deceleration determination step is made that the vehicle is being decelerated, determining whether the vehicle is in the initial state of turning, and the shift step includes, if the determination in the vehicle-turning determination step is made that the vehicle is in the initial state of turning, shifting the switching rotation speed toward a high rotation speed side.

Preferably, in the above driving apparatus, the controller is operable, when the electric motor is driven in the high-speed mode, to determine whether the vehicle is being decelerated, and wherein, if the determination is made that the vehicle is being decelerated, the controller is operable to determine whether the vehicle is in the initial state of turning, and wherein, if the determination is made that the vehicle is in the initial state of turning, the controller is operable to shift the switching rotation speed toward a high rotation speed side.

According to the above features, when the vehicle being decelerated is in the initial state of turning, the switching rotation speed is shifted toward a high rotation speed side. Thus, a timing of switching the output characteristic of the electric motor from the high-speed mode to the low-speed mode becomes earlier, and the switching to the low-speed mode is completed at the earliest possible timing in the vehicle-turning movement. This provides an advantage of being able to effectively prevent torque fluctuations due to switching of the output characteristic from disturbing a turning movement of the vehicle and destabilizing the behavior of the vehicle.

Preferably, in the motor control method of the present invention, the vehicle-turning determination step includes determining whether the vehicle is in a course of turning, and the shift step includes, if the determination in the vehicle-turning determination step is made that the vehicle is in the course of turning, shifting the switching rotation speed to allow the switching between the low-speed mode and the high-speed mode to be performed at a relatively late timing.

Preferably, in the driving apparatus of the present invention, the controller is operable, based on the acquired information, to determine whether the vehicle is in a course of turning, and wherein, if the determination is made that the vehicle is in the course of turning, the controller is operable to shift the switching rotation speed to allow the switching between the low-speed mode and the high-speed mode to be performed at a relatively late timing.

According to the above features, when the vehicle is in the course of turning, a timing of switching the output characteristic of the electric motor between the low-speed mode and the high-speed mode becomes later. This provides an advantage of being able to effectively avoid an undesirable situation where the output characteristic of the electric motor is immoderately switched during turning of the vehicle, and a turning movement of the vehicle is disturbed by torque fluctuations occurring during the switching, to adequately ensure stability of the behavior of the vehicle during turning.

Preferably, the above motor control method further comprises a vehicle-acceleration determination step of, when the electric motor is driven in the low-speed mode, determining whether the vehicle is being accelerated, and wherein the vehicle-turning determination step includes, if the determination in the vehicle-acceleration determination step is made that the vehicle is being accelerated, determining whether the vehicle is in the course of turning, and the shift step includes, if the determination in the vehicle-turning determination step is made that the vehicle is in the course of turning, shifting the switching rotation speed toward a high rotation speed side.

Preferably, in the above driving apparatus, the controller is operable, when the electric motor is driven in the low-speed mode, to determine whether the vehicle is being accelerated, and wherein, if the determination is made that the vehicle is being accelerated, the controller is operable to determine whether the vehicle is in the course of turning, and wherein, if the determination is made that the vehicle is in the course of turning, the controller is operable to shift the switching rotation speed toward a high rotation speed side.

According to the above features, when the vehicle is being accelerated and in the course of turning, the switching rotation speed is shifted toward a high rotation speed side. Thus, a timing of switching the output characteristic of the electric motor from the low-speed mode to the high-speed mode becomes later. This makes it possible to avoid an undesirable situation where the output characteristic of the electric motor is immoderately switched to the high-speed mode during turning of the vehicle, to effectively prevent torque fluctuations due to switching of the output characteristic from disturbing a turning movement of the vehicle and destabilizing the behavior of the vehicle.

Preferably, the above motor control method further comprises a vehicle-deceleration determination step of, when the electric motor is driven in the high-speed mode, determining whether the vehicle is being decelerated, and wherein the vehicle-turning determination step includes, if the determination in the vehicle-deceleration determination step is made that the vehicle is being decelerated, determining whether the vehicle is in the course of turning, and the shift step includes, if the determination in the vehicle-turning determination step is made that the vehicle is in the course of turning, shifting the switching rotation speed toward a low rotation speed side.

Preferably, in the above driving apparatus, the controller is operable, when the electric motor is driven in the high-speed mode, to determine whether the vehicle is being decelerated, and wherein, if the determination is made that the vehicle is being decelerated, the controller is operable to determine whether the vehicle is in the course of turning, and wherein, if the determination is made that the vehicle is in the course of turning, the controller is operable to shift the switching rotation speed toward a low rotation speed side.

According to the above features, when the vehicle is being decelerated and in the course of turning, the switching rotation speed is shifted toward a low rotation speed side. Thus, a timing of switching the output characteristic of the electric motor from the high-speed mode to the low-speed mode becomes later. This makes it possible to avoid an undesirable situation where the output characteristic of the electric motor is immoderately switched to the low-speed mode during turning of the vehicle, to effectively prevent torque fluctuations due to switching of the output characteristic from disturbing a turning movement of the vehicle and destabilizing the behavior of the vehicle.

This application is based on Japanese Patent Application Serial No. 2008-255328, filed in Japan Patent Office on September 30, 2008, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A motor control method for an electric-powered vehicle (1), which is designed to switch an output characteristic of an electric motor (5) for rotatably driving a driving wheel (16) of the vehicle (1), between a low-speed mode adaptable to a relatively low rotation speed operation region and a high-speed mode adaptable to a relatively high rotation speed operation region, on the basis of a given switching rotation speed (Nt) as a threshold, the motor control method comprising:
a vehicle-turning information acquisition step (S1, S2) of acquiring information about a turning movement of the vehicle (1);
a vehicle-turning determination step (S5, S9, S14, S18) of determining whether the vehicle (1) is in a non-straight-ahead traveling state, based on the information acquired in the vehicle-turning information acquisition step (S1, S2); and
a shift step (S6, S10, S15, S19) of, if the determination in the vehicle-turning determination step (S5, S9, S14, S18) is made that the vehicle (1) is in the non-straight-ahead traveling state, shifting the switching rotation speed (Nt) to a value different from that in a straight-ahead traveling state of the vehicle (1).

2. The motor control method as defined in claim 1, wherein:
the vehicle-turning determination step (S5, S14) includes determining whether the vehicle (1) is in an initial state of turning; and
the shift step (S6, S15) includes, if the determination in the vehicle-turning determination step is made that the vehicle (1) is in the initial state of turning, shifting the switching rotation speed (Nt) to allow the switching between the low-speed mode and the high-speed mode to be performed at a relatively early timing.

3. The motor control method as defined in claim 2, further comprising a vehicle-acceleration determination step (S4) of, when the electric motor (5) is driven in the low-speed mode, determining whether the vehicle (1) is being accelerated, and wherein:
the vehicle-turning determination step (S5) includes, if the determination in the vehicle-acceleration determination step (S4) is made that the vehicle (1) is being accelerated, determining whether the vehicle (1) is in the initial state of turning; and
the shift step (S6) includes, if the determination in the vehicle-turning determination step (S5) is made that the vehicle (1) is in the initial state of turning, shifting the switching rotation speed (Nt) toward a low rotation speed side.

4. The motor control method as defined in claim 2, further comprising a vehicle-deceleration determination step (S13) of, when the electric motor (5) is driven in the high-speed mode, determining whether the vehicle (1) is being decelerated, and wherein:
the vehicle-turning determination step (S14) includes, if the determination in the vehicle-deceleration determination step (S13) is made that the vehicle (1) is being decelerated, determining whether the vehicle (1) is in the initial state of turning; and
the shift step (S15) includes, if the determination in the vehicle-turning determination step (S14) is made that the vehicle is in the initial state of turning, shifting the switching rotation speed (Nt) toward a high rotation speed side.

5. The motor control method as defined in claim 1, wherein:
the vehicle-turning determination step (S9, S18) includes determining whether the vehicle (1) is in a course of turning; and
the shift step (S10, S19) includes, if the determination in the vehicle-turning determination step (S9, S18) is made that the vehicle (1) is in the course of turning, shifting the switching rotation speed (Nt) to allow the switching between the low-speed mode and the high-speed mode to be performed at a relatively late timing.

6. The motor control method as defined in claim 5, further comprising a vehicle-acceleration determination step (S4) of, when the electric motor (5) is driven in the low-speed mode, determining whether the vehicle (1) is being accelerated, and wherein:
the vehicle-turning determination step (S9) includes, if the determination in the vehicle-acceleration determination step (S4) is made that the vehicle (1) is being accelerated, determining whether the vehicle (1) is in the course of turning; and
the shift step (S10) includes, if the determination in the vehicle-turning determination step (S9) is made that the vehicle (1) is in the course of turning, shifting the switching rotation speed (Nt) toward a high rotation speed side.

7. The motor control method as defined in claim 5, further comprising a vehicle-deceleration determination step (S13) of, when the electric motor (5) is driven in the high-speed mode, determining whether the vehicle (1) is being decelerated, and wherein:
the vehicle-turning determination step (S18) includes, if the determination in the vehicle-deceieration determination step (S13) is made that the vehicle (1) is being decelerated, determining whether the vehicle (1) is in the course of turning; and
the shift step (S19) includes, if the determination in the vehicle-turning determination step (S18) is made that the vehicle (1) is in the course of turning, shifting the switching rotation speed (Nt) toward a low rotation speed side.

8. A driving apparatus for an electric-powered vehicle (1), comprising an electric motor (5) adapted to rotatably drive a driving wheel (16) of the vehicle (1), and a controller (15) adapted to switch an output characteristic of the electric motor (5) between a low-speed mode adaptable to a relatively low rotation speed operation region and a high-speed mode adaptable to a relatively high rotation speed operation region, on the basis of a given switching rotation speed (Nt) as a threshold, wherein:
the controller (15) is operable to acquire information about a turning movement of the vehicle (1), and, based on the acquired information, determine whether the vehicle (1) is in a non-straight-ahead traveling state, and wherein, if the determination is made that the vehicle (1) is in the non-straight-ahead traveling state, the controller (15) is operable to shift the switching rotation speed (Nt) to a value different from that in a straight-ahead traveling state of the vehicle (1).

9. The driving apparatus as defined in claim 8, wherein the controller (15) is operable, based on the acquired information, to determine whether the vehicle (1) is in an initial state of turning, and wherein, if the determination is made that the vehicle (1) is in the initial state of turning, the controller (15) is operable to shift the switching rotation speed (Nt) to allow the switching between the low-speed mode and the high-speed mode to be performed at a relatively early timing.

10. The driving apparatus as defined in claim 9, wherein the controller (15) is operable, when the electric motor (5) is driven in the low-speed mode, to determine whether the vehicle (1) is being accelerated, and wherein, if the determination is made that the vehicle (1) is being accelerated, the controller (15) is operable to determine whether the vehicle (1) is in the initial state of turning, and wherein, if the determination is made that the vehicle (1) is in the initial state of turning, the controller (15) is operable to shift the switching rotation speed (Nt) toward a low rotation speed side.

11. The driving apparatus as defined in claim 9, wherein the controller (15) is operable, when the electric motor (5) is driven in the high-speed mode, to determine whether the vehicle (1) is being decelerated, and wherein, if the determination is made that the vehicle (1) is being decelerated, the controller (15) is operable to determine whether the vehicle (1) is in the initial state of turning, and wherein, if the determination is made that the vehicle (1) is in the initial state of turning, the controller (15) is operable to shift the switching rotation speed (Nt) toward a high rotation speed side.

12. The driving apparatus as defined in claim 8, wherein the controller (15) is operable, based on the acquired information, to determine whether the vehicle (1) is in a course of turning, and wherein, if the determination is made that the vehicle (1) is in the course of turning, the controller (15) is operable to shift the switching rotation speed (Nt) to allow the switching between the low-speed mode and the high-speed mode to be performed at a relatively late timing.

13. The driving apparatus as defined in claim 12, wherein the controller (15) is operable, when the electric motor (5) is driven in the low-speed mode, to determine whether the vehicle (1) is being accelerated, and wherein, if the determination is made that the vehicle (1) is being accelerated, the controller (15) is operable to determine whether the vehicle (1) is in the course of turning, and wherein, if the determination is made that the vehicle (1) is in the course of turning, the controller (15) is operable to shift the switching rotation speed (Nt) toward a high rotation speed side.

14. The driving apparatus as defined in claim 12, wherein the controller (15) is operable, when the electric motor (5) is driven in the high-speed mode, to determine whether the vehicle (1) is being decelerated, and wherein, if the determination is made that the vehicle (1) is being decelerated, the controller (15) is operable to determine whether the vehicle (1) is in the course of turning, and wherein, if the determination is made that the vehicle (1) is in the course of turning, the controller (15) is operable to shift the switching rotation speed (Nt) toward a low rotation speed side.
